# EUROPÄISCHE PATENTSCHRIFT

(11) **EP 3 502 617 B1**
(45) Veröffentlichungstag und Bekanntmachung des Hinweises auf die Patenterteilung: **20.10.2021**
(21) Anmeldenummer: 17209646.3
(22) Anmeldetag: 21.12.2017
(51) Int. Cl.: G01C 15/00, G02B 27/00

(54) **VERMESSUNGSGERÄT MIT MESSSTRAHLHOMOGENISIERUNG**
MEASURING DEVICE WITH MEASURING BEAM HOMOGENIZATION
DISPOSITIF DE MESURE À HOMOGÉNÉISATION DU FAISCEAU DE MESURE

(43) Veröffentlichungstag der Anmeldung: 26.06.2019
(73) Patentinhaber: Leica Geosystems AG, 9435 Heerbrugg (CH)
(72) Erfinder: STUTZ, Reto, 9434 Au (CH); LAIS, Josef, 9437 Marbach (CH); HINDERLING, Jürg, 9437 Marbach (CH)
(74) Vertreter: Kaminski Harmann

(56) Entgegenhaltungen:
- EP-A1- 1 467 222
- EP-A1- 1 882 899
- EP-A2- 1 801 538
- DE-A1- 10 250 583

## Beschreibung

Die Erfindung betrifft ein Vermessungsgerät zur koordinativen Vermessung eines Zielobjekts nach dem Oberbegriff des Anspruchs 1 und ein koordinatives Vermessungsverfahren nach dem Oberbegriff des Anspruchs 13.

Geräte der koordinativen Vermessungstechnik zur Vermessung von Zielobjekten arbeiten vielfach auf Basis von optischen Messsystemen. Von diesen Geräten wird allgemein eine optische Strahlung, meist Laserstrahlung, in Richtung des zu vermessenden Zielobjekts ausgesandt, von welchem eine Entfernung und eine Winkellage - also Polarkoordinaten des Zielobjekts - bestimmt werden, welche meist in Folge weiterverarbeitet werden. Von dem zu vermessenden Zielobjekt wird dabei ein Anteil der emittierten Strahlung zum Gerät zurückgeworfen, dort empfangen und in ein elektrisches Signal zur Distanzbestimmung umgewandelt. Dabei können neben der Vermessung von natürlich vorhandenen Zielen auch spezielle Zielmarker oder Reflektoren am Zielobjekt angebracht werden oder es wird z.B. eine mobile Messlatte als Zielobjekt eingesetzt.

Die ausgesendete optische Strahlung kann dabei zur elektrooptischen Distanzmessung anhand eines Laufzeit- oder Phasenmessprinzips oder einer Kombination dieser Prinzipien genutzt werden, wie dieses etwa in EP 1 757 956, JP 4 843 128, EP 1 311 873, EP 1 450 128, EP 1 882 959, EP 1 043 602, WO 2006/063739 oder anderen beschrieben ist.

Die EP 1 801 538 A2 offenbart einen scanfähigen Laserentfernungsmesser.

Die ausgesendete optische Strahlung kann auch zur Erkennung und/oder Winkelvermessung eines Zielobjekts genutzt werden. Beispielsweise kann eine Zielmarke etwa in Form eines Retroreflektors oder als eines visuellen Merkmals des Zielobjekts, etwa einer Ecke, Kante, Grenze einer Kontrastfläche, etc. wie beispielsweise in WO 2011/141447 oder EP 1 791 082 beschrieben, ausgebildet sein. Dabei kann vom Vermessungsgerät eine gepulst oder kontinuierlich ausgesendete optische Strahlung zur Unterstützung der Erkennung der Ziele im Sichtfeld ausgesendet werden. Eine derartige Erkennung und/oder Vermessung eines Zielobjekts in Winkelkoordinaten kann mit einem positionssensitiven optischen Empfangselement im Gerät erfolgen, beispielsweise mit einem Flächensensor in CCD- oder CMOS-Technologie, einem PSD auf Basis des lateralen photoelektrischen Effekts oder einer Anordnung von einem oder mehrerer Photorezeptoren, wie etwa Photodioden, BiCells, Quadraturdioden, SPAD-Arrays, etc.

Zur Winkelbestimmung sind die Vermessungsgeräte meist mit einem oder mehreren Winkelmessern oder Goniometern ausgestattet, mit welchen das Gerät oder Teile davon zur Anzielung gedreht und dabei eine Winkellage bestimmt werden kann. Die Winkelvermessung des Ziels kann dabei unter Nutzung der Winkelmesserauswertung durch exaktes Anzielen des Zielobjekts mit einer Zielachse des Geräts erfolgen. Es kann aber auch, speziell bei hierzu geeigneten kooperativen Zielen, eine ungenaue Anzielung des Zielobjekts innerhalb eines Sichtfelds einer optoelektronischen Winkelmesseinheit (ATR) des Geräts mit den Winkelmessern erfolgen. Durch eine Bestimmung der Abweichung von einer idealen Anzielung innerhalb des Sichtfelds wird darauf folgend der Winkelmessermesswert um diese Abweichung korrigiert (automatische Zielerfassung oder Zielrichtungsmessung, ATR). Derartiges ist etwa in JP 3 748 112 oder GB 2 353 862 beschrieben. Bei den Vermessungsgeräten können die Bewegungen um die Drehachsen der Winkelmesser manuell und/oder motorisiert erfolgen.

Zur Distanz- und Winkelbestimmung kann dabei jeweils eine separate oder eine gemeinsame, vom Gerät ausgesendete Strahlung genutzt werden, also ein und derselbe Messstrahl bzw. Strahlungsquelle für beide Funktionen verwendet werden oder jeweils ein Messstrahl für die Distanzmessung und ein Strahl für die Winkelbestimmung bzw. Zielerfassung. Für Messungen auf nicht-kooperative Ziele muss die Divergenz des Messstrahls möglichst klein vorzugsweise beugungsbegrenzt sein, da ansonsten die Distanzmessung auf Grund der undefinierten Zielobjektausleuchtung nicht die geforderte Messgenauigkeit ergeben würde.

In der koordinativen Vermessungstechnik sind hohe Messgenauigkeiten sowohl bei der Winkel- als auch bei der Distanzbestimmung gefordert. Beispielsweise kommen im Bereich der Landvermessung oder Geodäsie Tachymeter oder Totalstationen zum Einsatz, welche Distanzmessgenauigkeiten von einigen Millimetern oder auch unter einem Millimeter aufweisen. Dabei sind Messbereiche von einigen Kilometer bei Messungen auf Tripelprismen oder retroreflektierende Zielmarken bzw. einigen hundert bis tausend Metern und darüber bei reflektorlosen Messungen gefordert. Die Genauigkeit der Winkelmessungen liegt meist in einem Bereich unter 2 bis 10 Winkelsekunden, vorzugsweise bei 1 Winkelsekunden, 0.5 Winkelsekunden oder darunter. Diese Anforderungen werden weiters erschwert durch die Tatsache, dass derartige Vermessungsgeräte oft in rauen Umgebungen mit stark wechselnden Umgebungsbedingungen, wie Temperatur, Luftfeuchtigkeit, etc. zum Einsatz gelangen.

Durch den Einbau von immer mehr Funktionalitäten in das Vermessungsgerät werden die optischen Pfade oder Strahlengänge im Geräteinneren immer komplexer. Vermessungsgeräte können beispielsweise Strahlengänge für Distanzmessung, sichtbare Pilotstrahle, automatische Zielsuche, automatische Zielerkennung, automatische Zielausrichtung, Durchsichtbetrachtung, Übersichtskameras, Zoomfunktionen, Bildaufnahme, Zielbeleuchtung, optische Datenkommunikation, interne Referenzstrecken, etc. aufweisen. Durch die hohe Anzahl der dabei benötigten optischen Komponenten wird nicht nur das Gerätedesign erschwert, sondern auch die Eigenschaften des Messstrahls beeinflusst, unter Umständen stark negativ.

Die Messstrahleigenschaften bzw. die Messstrahlqualität spielt für die Messgenauigkeit eine entscheidende Rolle. Eine Beeinträchtigung der Messgenauigkeit ist bei kohärenter Messstrahlung beispielsweise durch das Auftreten sog. Speckles gegeben, also durch optische Interferenzen durch Rückstreuung an einer Objektoberfläche, was zu einer Variation der Intensität des Empfangssignals führt. Messungenauigkeiten entstehen weiterhin u.a. durch ein vor allem für die Vermessung kooperativer Zielobjekte ungünstiges Profil des Messstrahls, häufig ein sog. Gauss-Profil. Zudem ist die laterale oder radiale Intensitätsverteilung eines Lichtpulses zeitabhängig, es resultiert hierdurch ein zeit- und winkelabhängiges Ausleuchtungsfeld. Durch diese Faktoren ist nachteilig z.B. die gemessene Distanz zu einem Zielobjekt abhängig von der Richtung zum Ziel und sie ist zudem zeitlich nicht konstant. D.h. für ein und dieselbe tatsächlich vorliegende zu messende Entfernung zum Ziel werden für Messungen zu unterschiedlichen Zeitpunkten und zu unterschiedlichen Winkeln zum Ziel unterschiedliche Entfernungen gemessen, sprich es liegt dadurch eine Messunsicherheit vor.

Als weiteres wird bei inhomogener Beleuchtung von Zieltargets als auch bei wechselnder Polarisation die Zielerkennung erschwert.

Es ist daher eine Aufgabe der vorliegenden Erfindung ein verbessertes Vermessungsgerät zur koordinativen Vermessung von Zielobjekten bzw. ein verbessertes koordinatives Vermessungsverfahren bereitzustellen.

Eine spezielle Aufgabe ist die Bereitstellung eines solchen Vermessungsgeräts mit einem verbesserten Messstrahl.

Diese Aufgaben werden durch die Gegenstände der unabhängigen Ansprüche gelöst und durch die Merkmale der abhängigen Ansprüche vorteilhaft weitergebildet. Weitere Vorteile der Erfindung ergeben sich aus der Beschreibung und den zugehörigen Figuren.

Gegenstand der Erfindung ist ein optisches Vermessungsgerät zur koordinativen Vermessung eines Zielobjekts, beispielsweise ein Tachymeter, eine Totalstation, ein Lasertracker, ein Laserscanner oder Lasernivelliergerät. Das Vermessungsgerät weist mindestens eine Lichtquelle auf, vorzugsweise eine Laserquelle, zur Generierung wenigstens eines optischen, insbesondere gepulsten, Messstrahls. Weiter weist das Gerät eine gegenüber einer Basis des Vermessungsgeräts um wenigstens eine Achse, insbesondere um zwei Achsen, drehbare Anzieleinheit, wobei die Anzieleinheit eine Zielachse zur Anzielung eines zu vermessenden, insbesondere kooperativen, Zielobjekts definiert und einen Strahlengang zum Führen und Aussenden des optischen Messstrahls in Richtung des zu vermessenden Zielobjekts sowie eine Empfangsoptik aufweist. Der Strahlengang weist hierfür beispielsweise eine Optik oder optische Elemente wie aus dem Stand der Technik bekannt auf. Weiter weist die Anzieleinheit wenigstens ein diffraktives optisches Element (DOE) auf. Das DOE ist dergestalt ausgebildet und im Strahlengang angeordnet oder anordenbar (das DOE ist in bevorzugten Ausführungsformen nicht permanent im Strahlengang angeordnet, sondern kann fallweise bzw. je nach Art der Anwendung, Messaufgabe bzw. Zielobjekt dort vollständig oder z.B. bei Vorliegen eines DOEs, welches in unterschiedliche Wirkzonen unterteilt ist, teilweise angeordnet werden), dass der Messstrahl vor dem Aussenden homogenisiert wird. Unter Homogenisieren wird dabei ein Vereinheitlichen des Messstrahls bzw. ggf. eines Messstrahlpulses verstanden, so dass Inhomogenitäten bzw. Uneinheitlichkeiten oder Ungleichverteilungen oder örtliche oder zeitliche Variationen der Intensität und der spektralen Verteilung des Messstrahls beseitigt oder zumindest mittels Mischen wesentlich vermindert werden.

Beispielsweise ist das diffraktive optische Element ausgebildet zum Mischen des Messstrahls, insbesondere zum Erzeugen einer Vielzahl von nebeneinander gesetzten und sich zumindest teilweise überlappenden Teilstrahlen. Durch das Mischen werden Ungleichverteilungen sozusagen eingeebnet und es entsteht ein einheitlicher oder zumindest einheitlicherer, also homogenisierter Messstrahl.

Das diffraktive optische Element ist als Option ausgebildet zur Homogenisierung der zeitlichen und/oder örtlichen Intensitätsverteilung innerhalb des Messstrahls. Alternativ oder zusätzlich ist das DOE ausgebildet zur Homogenisierung der Moden des Messstrahls im Objektraum, vorzugsweise durch deren Mischen, und/oder zur Homogenisierung der optischen Wellenfront des Messstrahls, insbesondere deren Glättung, und/oder der Abbildung der Lichtquelle im Fernfeld. Die Mischung und damit die Einebnung der Wellenfront erfolgt dabei z.B. mittels Dekorrelation der optischen Phasen an der Phasenplatte. Als weiterer Zusatz oder weitere Alternative erfolgt in Geräten mit gepulstem Messstrahl eine Homogenisierung durch das DOE der über den Strahlquerschnitt variierenden Laufzeit eines Messstrahlpulses.

Beim erfindungsgemässen Vermessungsgerät ist zur zeitlichen Homogenisierung die Relativlage von Messstrahl und diffraktivem optischem Element dynamisch, insbesondere periodisch, variierbar, indem das diffraktive optische Element im Strahlengang dergestalt bewegbar angeordnet oder anordenbar ist, dass das Element über den Messstrahl hinweg dynamisch bewegbar ist. Beispielsweise ist das DOE vibrierbar, insbesondere senkrecht zu einer Ausbreitungsachse des Messstrahls, und/oder rotierbar, insbesondere rotierbar eine Ausbreitungsachse des Messstrahls oder eine dazu parallel versetzte Achse bzw. mit einer Exzentrizität.

In einer zusätzlichen oder alternativen Fortbildung ist das DOE ausgebildet zur Veränderung des Strahlprofils des Messstrahls, insbesondere im Fernfeld bzw. für Vermessungen zu weiter entfernten Zielobjekten. Zum Beispiel wird ein Gauss-Strahlprofil (als ein übliches Beispiel für ein Profil mit einer ungleichmässigen, inhomogenen Intensitätsverteilung) in ein top hat-Strahlprofil homogenisiert. Alternativ oder zusätzlich ist das DOE ausgebildet zur Minderung oder Beseitigung zeitlicher und/oder richtungsabhängiger Inhomogenitäten des Messstrahls, insbesondere Intensitätsinhomogenitäten in longitudinaler Richtung zum Strahlengang und spektrale Intensitätsinhomogenitäten in lateraler Richtung zum Strahlengang.

Als weitere Option ist im Strahlengang wenigstens ein weiteres diffraktives optisches Element angeordnet oder anordenbar, welches ebenfalls ausgebildet ist zur Homogenisierung des Messstrahls, insbesondere in Zusammenwirkung mit dem oben genannten ersten DOE.

Optional ist das diffraktive optische Element ausgebildet zum divergenten Aussenden des Messstrahls, insbesondere mit einem Divergenzwinkel von maximal 3°, typisch 0,075°, 0,1°, 0,2°, 1° oder 1,5°. Vorzugsweise ist die Divergenz angepasst an den Empfangswinkel oder das Sichtfeld (FOV) der Empfangsoptik, so dass dieses vom Ziel rückgestreuten bzw. rückreflektierten Messstrahl optimal ausgeleuchtet wird. Dabei ist als weitere Option ein automatisches Umschalten einer axialen Fokussierung des Strahlengangs zwischen divergent und kollimiert durchführbar, z.B. durch eine automatische Veränderung der Relativlage von diffraktivem optischem Element zum Messstrahl bzw. Strahlengang.

Die Anzieleinheit ist optional derart ausgebildet und das diffraktive optische Element derart in der Anzieleinheit angeordnet, dass der vom diffraktiven optischen Element ausgehende Messstrahl als Freistrahl propagiert. Als weitere Option ist der gesamte Strahlengang zum Aussenden des Messstrahls lichtleiterlos, d.h. der Messstrahl durchläuft den ganzen Strahlengang als Freistrahl. Die Lichtquelle ist vorzugsweise eine Laserdiode, insbesondere wobei die Laserdiode ausgebildet ist als Kantenemitter.

Weiter weist das Vermessungsgerät vorzugsweise einen opto-elektronischen Entfernungsmesser auf und der Messstrahl ist geeignet zur Bestimmung einer Entfernung zum Zielobjekt mittels des opto-elektronischen Entfernungsmessers. Die Lichtquelle ist dann z.B. Bestandteil des Entfernungsmessers und der Messstrahl wird nur zur Entfernungsbestimmung herangezogen. Alternativ dient der Messstrahl auch für weitere Messaufgaben, z.B. als ATR-Strahl für die automatische Zielerfassung oder Zielrichtungsmessung. Das diffraktive optischen Element erzeugt durch Dekorrelation der Wellen- oder Modulationsfront des Laserbündels eine lateral ausgedehnte Lichtquelle hoher Homogenität, die nicht mehr auf einen Punkt oder eine Emissionslinie begrenzt ist. Diese spatiale Ausdehnung der Lichtquelle hat zudem den Vorteil höherer zulässiger Lasersicherheitsgrenzen.

Als Option weist das Vermessungsgerät eine solche automatische Zielerfassung mit einem optischen divergenten Zielerfassungsstrahl auf und das diffraktive optische Element ist dergestalt ausgebildet und in einem Strahlengang des Zielerfassungsstrahls angeordnet, dass der Zielerfassungsstrahl vor dem Aussenden homogenisiert wird. Wie gesagt handelt es sich bei dem Zielerfassungsstrahl um den Messstrahl oder einen zusätzlichen Lichtstrahl. Beispielsweise wird im Objektraum mittels diffraktivem optischen Element (und gegebenenfalls bzw. optional passend ausgelegter Sendeoptik) ein divergenter Messstrahl erzeugt, der eine Divergenz von 1,5° aufweist. Die mittels des Hologramms erzeugte Divergenz kann dabei optional in einem gewissen Bereich frei gewählt werden, indem mittels einer dem Hologramm nachgeschalteten Linsenoptik und Blendenanordnung die Divergenz im Objektraum eingestellt werden kann. Das diffraktive optische Element kann daher auch ausgebildet sein, um Divergenzen des Messstrahls von grösser als 1,5° zu erzeugen, vorzugsweise jedoch von nicht mehr als 3°.

Die Erzeugung eines divergenten Messstrahls durch das diffraktive optische Element wird als weitere Option alternativ oder zusätzlich für den fallweise vorliegenden opto-elektronischen Entfernungsmesser genutzt. Dabei liegt die Divergenz dann vorzugsweise etwa bei 0,2°. Das diffraktive optische Element kann dabei derart ausgebildet sein, dass unterschiedliche Divergenzen damit erzeugbar sind, z.B. je nach dem, ob es gerade für eine Zielerfassung oder Entfernungsmessung verwendet wird. Um mit einem DOE unterschiedliche Divergenzen zu erzeugen, ist dieses z.B. in Zonen unterschiedlicher Divergenzerzeugung aufgeteilt. Alternativ weist die Anzieleinheit mehrere DOEs mit unterschiedlichen Divergenzerzeugungseigenschaften (und/ oder Homogenisierungseigenschaften) auf, welche je nach Bedarf im Strahlengang anordenbar sind, z.B. durch einen translatorischen und/oder rotatorischen Verstellmechanismus.

Optional ist das diffraktive optische Element als optischer Diffusor ausgebildet, insbesondere mit einem Streuwinkel von höchstens 3°, und/oder durch Replikationstechnik hergestellt ist, insbesondere wobei das diffraktive optische Element ein replikationstechnisch aufgebrachtes Schichtmaterial, insbesondere mit einer Schichtdicke von weniger als 0.15 mm, im Speziellen weniger als 0.05 mm aufweist. Alternativ oder zusätzlich besteht das DOE aus Glas, insbesondere Kronglas, Kunststoff oder Kombinationen aus Glas und Kunststoff . Als weitere Option ist das DOE als Hologramm ausgebildet, insbesondere als Strukturhologramm, und/oder als Hybridlinse aus einer refraktiven, insbesondere asphärischen oder sphärischen, Linse mit einer diffraktiven Struktur ausgebildet . Als weitere Option ist das diffraktive optische Element polarisationserhaltend, d.h. es verändert die Polarisation der auftreffenden bzw. durchgehenden Messstrahlung nicht. Dies ermöglicht es mit dem Sendestrahl eine zusätzliche polarisationsbasierende Modulation bzw. Kodierung zu übertragen. Dies kann z.B. für phasenmodulierte Distanzmesser oder für eine Zielobjektkodierung genutzt werden.

Als weiterer Zusatz oder weitere Alternative ist das diffraktive optische Element zur Unterdrückung der nullten Beugungsordnung und/oder von Beugungsordnungen grösser als eins, insbesondere mittels einer Erzeugung großer Streukreise bei einer Beugung für diese Beugungsordnungen, ausgebildet, insbesondere mit einer verbleibenden Intensität von höheren Beugungsordnungen mit einem Anteil von weniger als 5 % einer Gesamtintensität.

Bestandteil der vorliegenden Erfindung ist weiters ein Verfahren zur koordinativen Vermessung eines, insbesondere kooperativen, Zielobjekts mit einem optischen Vermessungsgerät, z.B. einem Theodolit, einem Laserscanner, Lasernivellier oder einer Totalstation. Im Rahmen des Verfahrens erfolgt ein Anzielen des Zielobjekts mit einer Zielachse einer Anzieleinheit des Vermessungsgeräts, wobei das Anzielen mit einem Aussenden von optischer, insbesondere gepulster und/oder divergenter, Messstrahlung , insbesondere Laserstrahlung, entlang eines ersten Strahlengangs in Richtung des, insbesondere im Fernfeld platzierten, also z.B. in einer Entfernung von wenigstens 10m oder 15m, Zielobjekts erfolgt. Weiter erfolgt im Rahmen des Verfahrens ein, insbesondere zeitliches und/oder örtliches, Homogenisieren der Messstrahlung vor dem Aussenden mittels eines diffraktiven optischen Elements im Strahlengang.

Optional handelt es sich bei dem Homogenisieren mittels des DOE um ein Vereinheitlichen der zeitlichen und/oder räumlichen Intensitätsverteilung der Messstrahlung und/oder der Moden der Messstrahlung im Objektraum. Alternativ oder zusätzlich ist das Homogenisieren ein Vereinheitlichen der Wellenfront der Messstrahlung, insbesondere deren Glättung oder Einebnung, und/oder im Falle gepulster Messstrahlung der Laufzeit eines Messstrahlungspulses.

Gegenstand der vorliegenden Erfindung ist weiter ein Computerprogrammprodukt mit Programmcode, der auf einem maschinenlesbaren Träger, insbesondere eines oben beschriebenen koordinativen Vermessungsgeräts, gespeichert ist, oder Computer-Daten-Signal, verkörpert durch eine elektromagnetische Welle, zur Durchführung des oben genannten Verfahrens.

Das erfindungsgemäße Verfahren und die erfindungsgemäße Vorrichtung werden nachfolgend anhand von konkreten Ausführungsbeispielen, welche in den Zeichnungen schematisch dargestellt sind, rein beispielhaft näher beschrieben. Dabei wird auch auf weitere Vorteile der Erfindung eingegangen. Im Einzelnen zeigen:
- Fig. 1: ein Beispiel einer Ausführungsform eines Vermessungsgeräts im Sinne der vorliegenden Erfindung;
- Fig. 2a: eine schematische Darstellung eines inneren Aufbaus einer ersten Ausführungsform eines erfindungsgemässen Vermessungsgeräts;
- Fig. 2b: eine schematische Darstellung eines inneren Aufbaus einer zweiten Ausführungsform eines erfindungsgemässen Vermessungsgeräts;
- Fig. 3a, 3b und 3c: schematische Darstellungen eines erfindungsgemässen Homogenisierens;
- Fig. 4: eine schematische Darstellung eines weiteren Beispiels für ein erfindungsgemässen Homogenisierens;
- Fig. 5: eine schematische Darstellung eines weiteren Beispiels für ein erfindungsgemässen Homogenisierens;
- Fig. 6: eine schematische Darstellung eines weiteren Beispiels für ein erfindungsgemässen Homogenisierens; und
- Fig. 7a und 7b: schematische Darstellungen für eine fallweise Modifikation des Messstrahls.

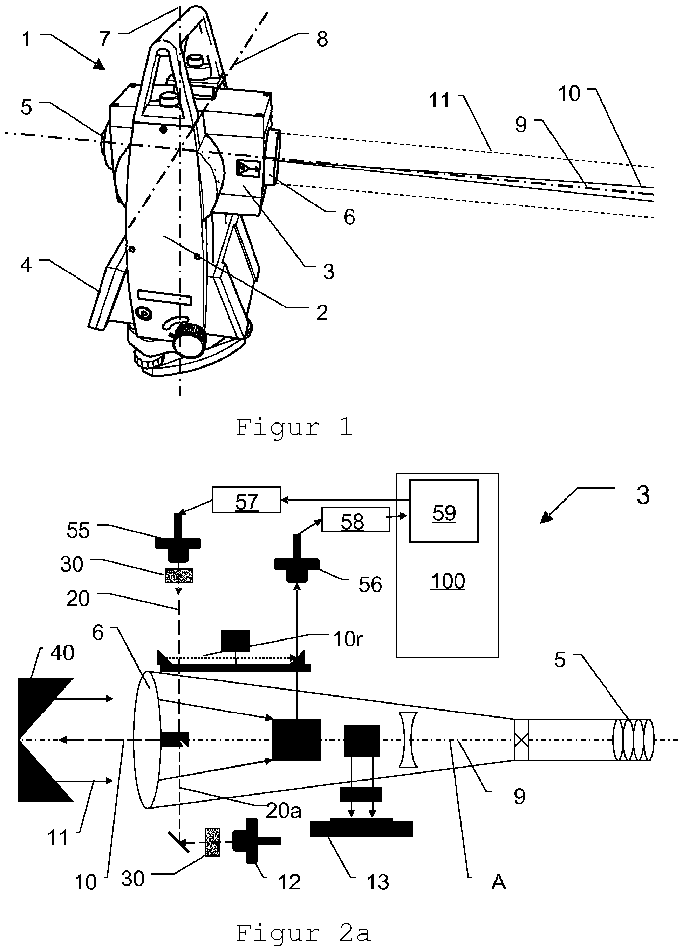

In Fig. 1 ist ein Beispiel eines geodätischen optischen Vermessungsgeräts 1 gezeigt, in welchem die vorliegende Erfindung angewandt wird. Das Gerät 1 besitzt eine Basis mit welcher es, z.B. mit einem hier nicht dargestellten Stativ, zu Vermessungszwecken stationiert wird. Auf der Basis ist, mit einem um eine Stehachse 7 drehbaren Vertikal-Goniometer ein Gerätekörper 2 des Geräts 1 angebracht. Die Basis verfügt über Einrichtungen zur Horizontierung des Geräts 1 - oder anders ausgedrückt zur Lotrechtstellung der Stehachse 7, beispielsweise mit Hilfe von drei Stellschrauben und einer Dosenlibelle und/oder einer elektronischen Libelle. Der Gerätekörper 2 weist eine Bedieneinheit 4 auf und ist durch ein um die Kippachse 8 drehbaren Kippachsen-Goniometer mit der Anzieleinheit 3 verbunden. Die Anzieleinheit 3 weist im gezeigten Fall ein Fernrohr mit einem Objektiv 6 und mit einem Okular 5 auf, ist also mit einem Durchsichtkanal ausgestattet. Andere Ausführungen können neben oder alternativ zum optischen Teleskop auch ein digitales Okular und/oder eine Bildschirmanzeige auf der Bedieneinheit 4 oder einem externen Steuerungsgerät aufweisen. Die Anzieleinheit 3 definiert eine Zielachse 9, welche im Idealfall exakt senkrecht auf der Kippachse 8 des Kippachsen-Goniometers steht, welche wiederum senkrecht zur lotrecht ausgerichteten Stehachse 7 des Vertikal-Goniometers ist. Es sind die drei Achsen also zumindest annähernd orthogonal zueinander und die Zielachse 9 ist mittels Bewegung der sie definierende Anzieleinheit 3 bezüglich der Basis um zwei Achsen beweglich. In Richtung der Zielachse 9 erfolgt eine Distanzmessung mit einem optoelektronischen Entfernungsmesser in der Anzieleinheit 3, dessen optische Achse als Ziellinie im Idealfall der Zielachse 9 entspricht.

Somit kann das Gerät 1 ein angezieltes Zielobjekt, beispielsweise ein Retroreflektor oder eine Reflexzielmarke, mit den beiden Winkelmessern und dem Entfernungsmesser in Polarkoordinaten vermessen. Die Polarkoordinaten können infolge auch in andere Koordinatensysteme umgerechnet werden oder es können auf deren Basis komplexere Vermessungsaufgaben und Berechnungen durchgeführt werden, was z.B. über die Bedieneinheit 4 gesteuert von einem geräteinternen Digitalrechner oder mit einem externen Computer durchführbar ist.

Der optoelektronische Entfernungsmesser ist im gezeigten Beispiel so ausgeführt, dass der Strahlengang einer ausgesendeten optischen Messstrahlung 10 und der Strahlengang der vom Gerät 1 empfangenen optischen Strahlung 11 eine zumindest annähernd gemeinsame optische Achse aufweisen, welche im Idealfall auch mit der Zielachse 9 zusammenfällt. Eine Grundvoraussetzung ist dabei, dass zumindest sichergestellt ist, dass die optische Achse des Empfängers derart auf die Ziellinie des Senders ausgerichtet ist, dass das Gesichtsfeld des Empfängers den Lichtfleck des Senders auf dem Zielobjekt erfasst.

Bei der gezeigten Ausführungsform handelt es sich um ein optisches Vermessungsgerät 1 mit einer Basis zur Aufstellung des Geräts 1 und einer gegenüber der Basis um zwei mit Winkelmessern versehenen Achsen 7 und 8 drehbaren Anzieleinheit 3. Die Anzieleinheit 3 hat dabei eine Zielachse 9 zur Anzielung eines zu vermessenden Zielobjekts 40, wobei die Anzielung z.B. mittels eines Zielfernrohrs erfolgen kann und/oder über die Zielachse des Messtrahls 10 (oder optional auch eines separaten Anzielstrahls, z.B. eines Laserpointers). Die Anzieleinheit 3 weist weiter einen Strahlengang zum Aussenden optischer Messstrahlung 10 in Richtung des zu vermessenden Zielobjekts 40 sowie einen weiteren Strahlengang zum Empfang eines vom Zielobjekt zurückgeworfenen Anteils der optischen Messstrahlung 11 durch ein optoelektronisches Empfangselement auf, wobei beide Strahlengänge zumindest teilweise deckungsgleich sein können.

Die Eigenschaften des ausgesandten Messstrahls 10 sind bezüglich der Messgenauigkeit von entscheidender Bedeutung. Die Genauigkeit einer Distanzmessung wird auch durch das Target selbst beeinflusst. Bei einem Retroreflektor erfolgt unausweichlich eine spatiale Selektion der Modulationswellenfront der emittierten Strahlung, was zu systematischen Distanzabweichungen führen kann. Bei Reflexfolien und diffus reflektierenden Zielen entstehen Speckles, welche chromatisch bedingte Messabweichungen erzeugen. Bei natürlichen Zielgegenständen variiert oft der Reflexionsgrad über die Oberfläche, dadurch entsteht eine örtliche Gewichtung des auftreffenden Messstrahls 10 und bei Vorhandensein einer inhomogenen Modulationswellenfront wird die absolute Distanzmessgenauigkeit reduziert.

Eine Minderung der Messgenauigkeit entsteht u.a. bei Laserstrahlung bzw. kohärenter Strahlung durch das Auftreten der sog. Speckles. Speziell, aber nicht nur bei der ATR stört das Vorhandensein von Speckles die Richtungsmessung und mindert die Winkelgenauigkeit der ATR. Ein weiteres Problem ergibt sich für die heutzutage erforderliche Präzision durch örtliche oder zeitliche Variation des Messstrahls 10 bzw. von Messstrahlpulsen. Besonders wenn Laserdioden als Strahlungsquelle verwenden werden, ergeben sich derartige Nachteile, da dies über ihre aktive Fläche hinweg ungleichmässig abstrahlen. Z.B. weist die Wellenform Unregelmässigkeiten auf oder die Wellenform ist je nach Abgabewinkel unterschiedlich.

Es besteht ein Bedarf an Strahlhomogenisierung sowohl bei beugungsbegrenzten kollimierten Messstrahlen 10 beim Anmessen von reflektorlosen Zielen als auch bei divergenten Messstrahlen für retroreflektive Zielmarken.

Fig. 2a zeigt ein Beispiel für einen internen Aufbau einer ersten Ausführungsform einer Anzieleinheit 3 eines erfindungsgemäßen, beispielsweise geodätischen, Vermessungsgeräts 1, welches die genannten Nachteile behebt oder zumindest entscheidend mindert. Die in diesem Beispiel gezeigten Komponenten und deren Anordnung sind rein schematisch zu betrachten und kann in anderen Ausführungsformen auch variieren oder es können auch Teile davon weggelassen, ergänzt oder in den Gerätekörper 2 verlagert werden.

Das Gerät 1 ist wie in Fig. 1 mit einem Durchlichtkanal ausgestattet, hat also ein Okular 5, durch welches in das Objektiv 6 eintretendes Licht beobachtet werden kann. Alternativ oder zusätzlich kann eine Aufnahme des Beobachtungsbildes durch eine Kamera 13 und ein Betrachten dieses Bildes auf einem Monitor oder Display erfolgen, welches über das Objektiv 6 und weitere nicht dargestellte Optiken im Gerät 1 erzeugt wird. Alle in diesem System wesentlichen optischen Komponenten sind auf eine gemeinsame optische Achse A ausgerichtet bzw. auf eine gemeinsame optische Achse A bezogen (beispielsweise mit bekannter Fehlrichtung bzw. Vorhalt der Achsen der jeweiligen Komponenten zueinander). Die optische Achse A der Beobachtung entspricht im gezeigten Fall der Zielachse 9 des Geräts, welche beim Beobachten durch eine Anzielhilfe wie z.B. ein Fadenkreuz oder ähnlichem kenntlich gemacht werden kann.

Weiters sind einige wesentliche Teile des opto-elektronischen Entfernungsmessers (EDM) gezeigt. Die Kontrolleinheit 100 des Geräts 1 ist mit der EDM-Steuerung 59 verbunden, welche über eine Treiberstufe 57 die Emission von optischer Messstrahlung 10, vorzugsweise Laserstrahlung, durch die Lichtquelle 55 steuert. Die Lichtquelle 55 ist z.B. ausgeführt als Halbleiterlichtquelle z.B. als kantenemittierende Laserdiode (spatial ein- oder mehrmodig) oder als Laserlichtquelle in Form eines Festkörperlasers, eines Faserlasers oder eines MOPA (Seedlaser mit optischem Verstärker) oder einer Kombination dieser. Es kann eine einzige oder mehrere Lichtquellen 55 geben, welche z.B. unterschiedliche optische Eigenschaften, wie Wellenlängen, Polarisation, etc. aufweisen können. Es kann auch ein Halbleiterlaserelement, mit welchem mehr als eine Wellenlänge von Licht emittierbar ist, genutzt werden. Z.B ist es möglich, lediglich einen einzigen Sender 55 mit einem entsprechend spektral breitbandigen Emissionsspektrum vorzusehen und diesen durch Kombination mit entsprechenden Filtern, Objektiven bzw. optischen Elementen, wie z.B. ein unten beschriebenes diffraktives optisches Element, zur wechselweisen Abgabe von Strahlung unterschiedlicher Wellenlängenbereiche und Divergenzen zu benutzen. Beispielsweise ist eine erste Wellenlänge für die automatische Zielerfassung vorgesehen, welche im Infrarot- oder im sichtbaren Bereich liegt und eine zweite Wellenlänge für den Entfernungsmessstrahl in einem hiervon abweichenden Infrarotbereich, und die Wellenlänge eines Pointerstrahls liegt im sichtbaren Bereich des Lichtes.

Im Strahlengang 20 zum Führen und Aussenden des Lichts der Lichtquelle 55 des Geräts 1 ist in der hier gezeigten Ausführungsform erfindungsgemäß ein diffraktives optisches Element 30 (DOE) vorhanden, also ein optisches Element, welches den Lichtpfad bzw. Messstrahl 10 mittels Beugung beeinflusst. Das DOE ist dabei dergestalt ausgebildet und im Strahlengang 20 angeordnet, dass der Messstrahl 10 homogenisiert wird, d.h. Ungleichheiten vermindert bzw. minimiert oder beseitigt werden oder um zeitliche und/oder richtungsabhängige Inhomogenitäten des Messstrahls wie beispielsweise Intensitätsinhomogenitäten oder der Modenverteilung, zu mindern oder zu beseitigen. Die Anordnung des DOE 30 befindet sich wie im Beispiel gezeigt im Freistrahl. Der Messstrahl 10 wird also nach Durchgang durch das DOE 30 auf das zu vermessende Ziel frei emittiert und es erfolgt kein Einkoppeln des vom DOE 30 ausgehenden Messstrahls 10 in einen Lichtleiter. Das Emittieren des Messstrahls 10 auf das Ziel ohne Verwendung eines Lichtleiters hat den Vorteil hoher Transmission und Verhinderung von Rückstreuung an den Enden von Lichtfasern, was zu Distanzmessfehlern führen könnte. Zudem sind Lichtleiter i.d.R. nachteilig nicht polarisationserhaltend.

Optional kann das Hologramm in den Strahlengang 20 ein- und ausgeschwenkt werden. Dies ist besonders vorteilhaft bei beugungsbegrenzten Laserstrahlen mit kleinst möglicher Divergenz. Im ausgeschwenkten Zustand wird die Divergenz des Sendestrahls 10 nicht vergrössert und der Lichtfleck am Zielobjekt hat dadurch kleinst mögliche Ausdehnung. Bei in den Messstrahl 10 eingeschwenktem DOE hingegen wird die Divergenz des Strahls vergrössert und gleichzeitig homogenisiert, dies bewirkt hohe Messgenauigkeit auf reflektive Ziele wie Zielmarken oder Retroreflektoren.

Das DOE 30 ist dabei beispielsweise als optischer Diffusor und/oder Hologramm ausgebildet oder mittels Replikationstechnik hergestellt. Als weitere Option besteht das DOE 30 aus Glas, Kunststoff oder einer Kombination hiervon. Weiter kann das DOE 30 als Hybridlinse aus einer refraktiven Linse mit diffraktiver Struktur ausgebildet sein. Weiter ist das DOE 30 optional ausgebildet zur Unterdrückung der nullten oder Beugungsordnungen höher als eins.

Als weitere Option ist das DOE 30 polarisationserhaltend, wodurch die Polarisation des Messstrahls 10 definiert und bekannt sein kann, so dass dann auch die Polarisation des zurückkommenden Strahls 11 bekannt ist, was z.B. Vorteile hinsichtlich einer Filterung des ankommenden Lichts bietet oder den Verzicht auf einen polarisationsunabhängigen Strahlteiler ermöglicht. Dabei kann der Strahlengang 20 bzw. die darin vorkommenden optischen Elemente insgesamt so ausgebildet sein, dass die Polarisation des Messstrahls 10 erhalten bleibt.

In einer weiteren Ausführungsform können 2 DOEs hintereinander angeordnet sein. Dadurch wird ein höherer Grad der Strahlhomogenisierung insbesondere im Nahfeld erreicht. Des weitern können die diffraktiv optisch wirksamen Schichten beidseitig auf einer gemeinsamen, nur wenige Millimeter dicken Trägerplatte aufgebracht sein. Dadurch erhält das DOE eine kompakte Baugrösse und wirkt nicht nur bei grossen sondern bereits bei kurzen Objektdistanzen stark homogenisierend.

Erfindungsgemäß kann das genannte DOE oder -wie dargestellt- ein weiteres DOE 30 auch zur Homogenisierung eines Zielerfassungsstrahls einer automatischen Zielerfassung (ATR) vorhanden sein. In der dargestellten Ausführungsform weist der Strahlengang 20a mit der ATR-Lichtquelle 12 ein weiteres DOE 30 auf, welches erfindungsgemäß optional zusätzlich vorhanden sein kann. Als positions- oder richtungsempfindlicher Sensor der ATR wirkt Flächensensor 13, dieser ist beispielsweise als PSD-Sensor oder als CCD- oder CMOS-Bildsensor ausgebildet.

Es kann bei Vorhandensein von mehreren Lichtquellen 55, 12 erfindungsgemäß auch ein einziges DOE 30 zum Homogenisieren des jeweiligen Messstrahls 10, 10a angewandt werden bzw. eine einzige Lichtquelle bzw. ein einziger Messstrahl in einem einzigen, gemeinsamen Strahlengang 20 mit einem DOE 30 z.B. zur Distanzmessung und zum automatischen Zielerfassung verwendet werden.

Weiters gezeigt ist ein, über eine geräteinterne Referenzstrecke geführter, Referenzlichtanteil 10r der Messstrahlung 10, welcher zu einem Messlichtempfänger 56 geführt wird, wodurch eine Entfernungsmessung nach dem Laufzeitprinzip (Time-of-flight) erfolgen kann.

Da es sich wie beschrieben um einen koaxial aufgebauten Entfernungsmesser handelt, wird der Strahlengang der Messstrahlung 10 (sowie hier gezeigt auch die Zielbeleuchtungsstrahlung der Lichtquelle 12) auf die optische Achse des Objektivs 6 und somit auf die Zielachse 9 des Geräts eingespiegelt. Das Objektiv 6 dient im Beispiel also auch als Empfangsoptik. Das Messlicht 10 oder zumindest ein Teil davon wird nun vom Zielobjekt 40 zurückgeworfen. Im gezeigten Fall ist das Zielobjekt 40 als Retroreflektor ausgebildet.

Das zurückgeworfene und empfangene Messlicht 11 wird auf ein Detektionselement 56 (z.B. eine Photodiode) des EDMs gelenkt, was z.B. über ein wellenlängenselektives Ausspiegeln erfolgen kann. Das detektierte Lichtsignal wird infolge in Block 58 als ein elektrisches Signal aufbereitet und von der Entfernungsmesseinheit 59 wird eine Distanz vom Vermessungsgerät zum Zielobjekt bestimmt, etwa in Form einer Laufzeitmessung, Phasenmessung, Signalformauswertung oder einer Kombination dieser Prinzipien.

Der Empfangsstrahlengang wird im Beispiel auch auf eine Kamera 13, z.B. mit CCD- oder CMOS-Bildsensor oder PSD aber auch oder zusätzlich als RIM-Sensor, sowie zum Okular 5 gelenkt.

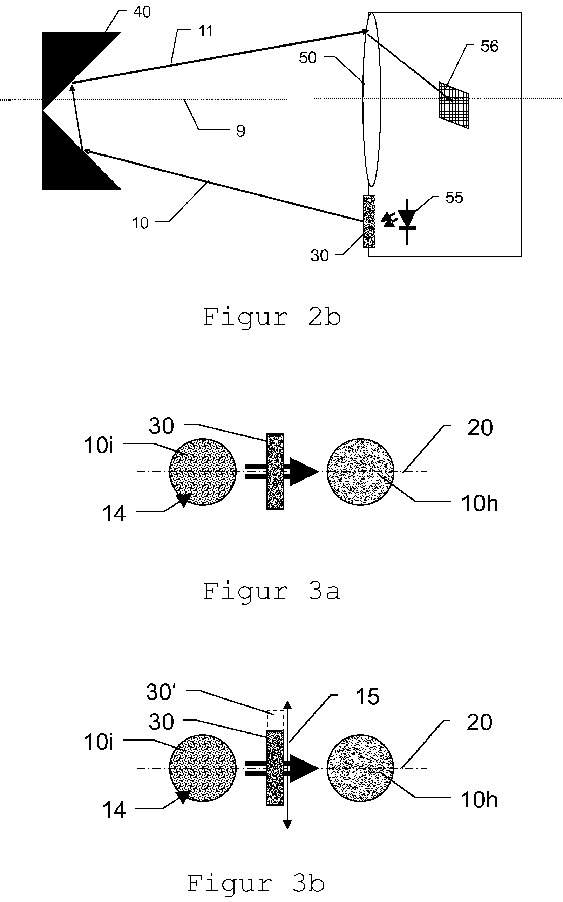

Fig. 2b zeigt Teile einer Ausführungsform alternativ zu der nach Figur 2a, bei welchem die Aussendung von optischer Entfernungsmessstrahlung biaxial zur Zielachsrichtung 9 des Vermessungsgeräts erfolgt. Die optische Achse des Sendestrahlengangs mit dem DOE 30 zum Aussenden von Messstrahlung 10 weicht also klar vom Empfangsstrahlengang der Objektivlinse 50 zum Empfang von vom Zielobjekt 40 rückgestrahlter Messstrahlung 11 und Führen auf den Detektor 56 mit der Zielachse 9 ab, z.B. indem - wie gezeigt - hierfür jeweils dezidierte, nebeneinander angeordnete Optiken 50, 30 verwendet werden. Das DOE 30 ist im optischen Strahlengang 20 als Freistrahlelement angeordnet, d.h. der Messstrahl 10 propagiert als freier Strahl (wenigstens nach Durchgang durch das DOE 30, bevorzugt jedoch entlang des gesamten Strahlengangs 20).

Durch das DOE 30 wird der Messstrahl 10 homogenisiert, so dass Ungleichheiten vermindert oder beseitigt werden.

Insbesondere werden zeitliche und richtungsabhängige Inhomogenitäten des Messstrahls 10 wie beispielsweise Inhomogenitäten der zeitlichen Phase, der Intensität und gegebenenfalls vorhandener Strahlungsmoden durch das DOE 30 reduziert oder ausgelöscht. Auch kann die Anordnung bestehend aus Strahlungsquelle 55 für das Aussenden von Messstrahlung 10 und aus DOE 30 in mehrfacher Ausführung axialsymmetrisch um die Zielachse 9 herum angeordnet sein, wodurch einerseits die Bestrahlungsstärke des Zielobjekts erhöht und andererseits die Homogenisierung der Messstrahlung 11 zusätzlich verbessert wird.

Fig. 3a zeigt ein Beispiel eines erfindungsgemäßen Homogensierens eines Messstrahls mittels eines DOE 30. Im Beispiel erfolgt ein Ausgleich von Speckles bzw. einer Anpassung der Modulationswellenfront des von der Laserdiode ausgehenden Laserstrahls 10i (dargestellt im zum Strahlengang 20 um 90° verdrehten Querschnitt), so dass der Strahl 10h nach dem Durchgang durch das DOE diese Schwankungen nicht mehr oder deutlich reduziert aufweist.

Fig. 3b zeigt eine weiter verbesserte Ausführungsform. In Weiterbildung der Ausführung nach Figur 3a ist hier das DOE 30 im Strahlengang 20 bewegbar angeordnet (zeichnerisch angedeutet durch gestrichelte Darstellung 30' in einer zweiten Lage relativ zum Strahlengang 20). Durch eine zyklische oder periodische Bewegung 15 des DOEs 30 mittels entsprechender Aktuatoren (nicht dargestellt) senkrecht zum Strahlengang 20 bzw. zur Ausbreitungsachse des Messstrahls 10i erfolgt ein weiteres Verwischen von Speckle-Effekten bzw. Mischen des Messstrahls 10i. Dieses Vibrieren kann hierfür bzw. auch für weitere Arten der Homogenisierung des Messstrahls in der Bewegungsamplitude recht gering sein, erfolgt jedoch mit großer Frequenz, insbesondere mit einer Amplitude, welche hinreichend zur Vermischung des Messstrahls bzw. Verwischung der Speckles und einer Frequenz, welche hinreichend schnell ist, um eine Mittelung von Speckles während einer Messung oder über mehrere Messungen, welche zur Messwertbildung gemittelt werden, hinweg zu erzielen.

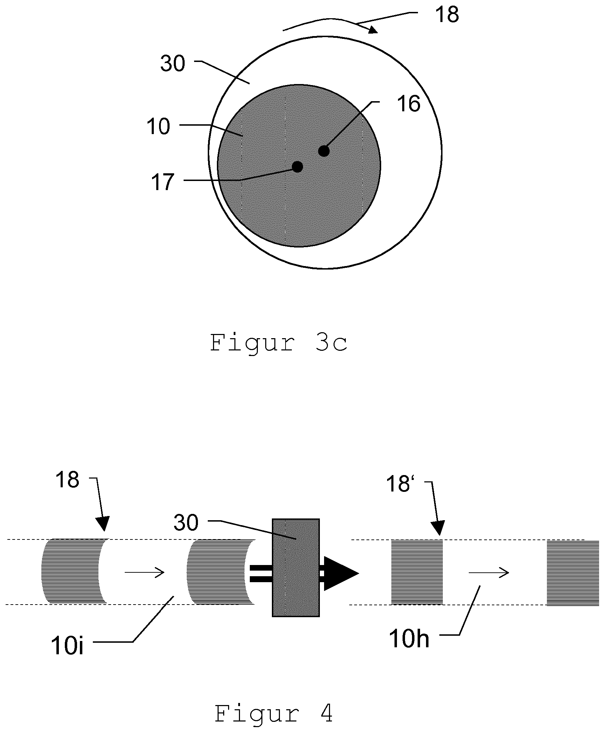

Fig. 3c zeigt eine Alternative zur Ausführungsform nach Fig. 3b im Querschnitt. Hierbei wird eine dynamische Variation der Relativlage von DOE 30 und Messstrahl 10 und damit ein verbessertes Homogenisieren des Messstrahls 10 dadurch erzielt, dass sich das DOE 30 relativ zum Messstrahl 10 dreht, wobei die Drehung z.B. mittels eines Motors direkt über die Drehachse 16 oder indirekt über entsprechende Transmissionselemente erfolgt (nicht dargestellt). Im Beispiel ist dabei die Drehachse 16 relativ zur Strahlachse 17 versetzt, so dass eine exzentrische Rotation erfolgt. Statt einer gleichsinnigen Drehbewegung 18 wie dargestellt kann alternativ eine pendelnde Bewegung des DOE 30 relativ zum Messstrahl erfolgen. Auch hier erfolgt die Drehbewegung derart schnell, dass eine ausreichendes Homogenisieren oder Vermischen des Strahls 10 während der Messzeit einer Distanz- oder Richtungsmessung erreicht wird.

Als weitere Alternative erfolgt bezogen auf die Ausführungsformen nach Fig. 3b und 3c nicht eine Bewegung des DOEs 30 im Strahlengang, sondern eine Relativbewegung von Messstrahl zu DOE 30 wird durch eine Bewegung des Messstrahls erreicht, beispielsweise durch ein vorgeschaltetes variables optisches Element oder durch eine Variation/Bewegung der Lichtquelle selbst.

In einer weiteren Ausführungsform kann das DOE 30 in den Strahlengang 20 ein und ausgeschwenkt werden. Im eingeschwenkten Zustand kann es entweder statisch angeordnet sein oder mit einer zyklischen Bewegung 15, 18 über den Strahlengang 20 veschoben werden.

Fig. 4 zeigt eine Anpassung der Modulationswellenfront der Intensität einer gepulsten emittierten Strahlung als weiteres Beispiel einer Homogenisierung entsprechend der vorliegenden Erfindung. Optoelektronische Vorrichtungen wie Entfernungsmesser, ATR oder Zielsucheinheit arbeiten üblicherweise mit zeitlich modulierten Sendestrahlen. Die Messgenauigkeit einer solchen Messvorrichtung wird unter anderem von der Ebenheit oder Uniformität der Modulations- oder Intensitätswellenfront 18 der verwendeten Strahlung 10 beeinflusst. Durch ein erfindungsgemässes DOE 30 erfolgt eine Homogenisierung der Modulationswellenfront 18, besonders eine Erzeugung einer glatten Modulationswellenfront 18' der emittierten optischen Strahlung am Zielobjekt bzw. im Fernfeld, bzw. die Modulationswellenfront wird in eine andere gewünschte, beispielsweise ebene und damit homogene Form gebracht. Neben einer statischen Glättung der Modulationswellenfront 18 kann auch eine dynamische Glättung derselben erfolgen, wobei die Verbesserung der Messgenauigkeit aufgrund einer zeitlichen Mittelung erfolgt.

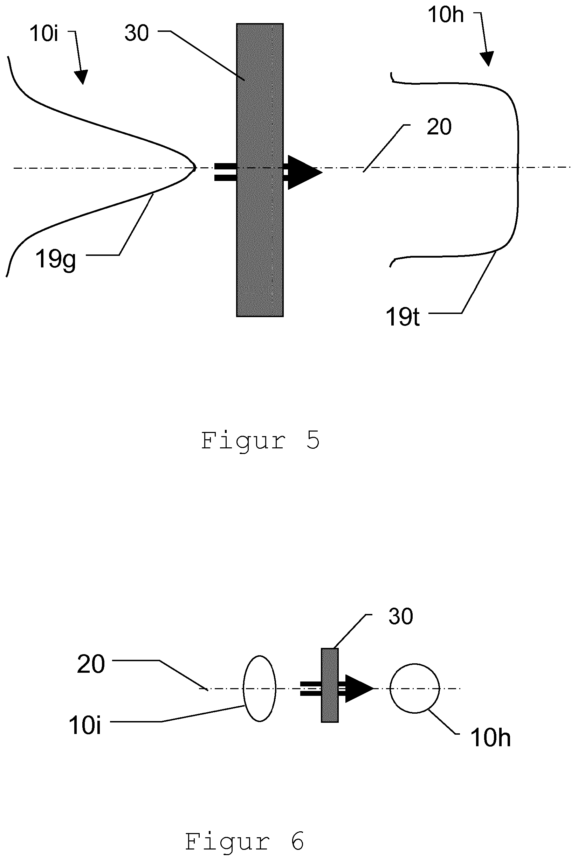

Fig. 5 zeigt ein weiteres Beispiel einer erfindungsgemässen Homogenisierung mittels eines DOE 30 im Strahlengang. Im Beispiel ist das DOE 30 derart ausgebildet, dass eine Homogenisierung des Strahlprofils erfolgt, wobei hier der Eingangsstrahl 10i ein für Laserquellen übliches Gauss-Profil 19g aufweist. Der Lichtpuls 10i weist also vor dem Durchgang durch das DOE 30 eine uneinheitliche Form auf bzw. eine räumlich ungleichmässige Intensitätsverteilung. Diese bewirkt z.B., dass je nach räumlicher Orientierung von Lichtpuls 10i und Zielobjekt bzw. je nach Auftreffpunkt auf dem Zielobjekt unterschiedliche Laufzeiten gemessen werden, da z.B. die Spitze des Pulses früher auftrifft als ein Randbereich, was hinsichtlich hochgenauer Messungen nachteilig ist. Durch das erfindungsgemässe DOE 30 erfolgt nun eine Formung des Eingangsstrahlprofils 10g hin zu einem homogenen Messpuls 10h mit Rechteckprofil oder top-hat Profil 19t, welches eine homogenes Strahlprofil darstellt mit einer gleichmässigen Intensitätsverteilung. Dies ist insbesondere vorteilhaft für Messungen im Fernfeld, also dort, wo die Winkeldivergenz des Messstrahls dominant wird bzw. ist oder die Strahldivergenz den Anfangs-/Austrittsdurchmesser des Messstrahls (signifikant) überhöht.

Fig. 6 zeigt in einer Darstellungsart wie die Figuren 3a und 3b ein Beispiel eines erfindungsgemäßen Ausgleichs von unterschiedlichen Divergenzwinkeln eines von einer Halbleiterlichtquelle emittierten Laserstrahls 10i, welcher als optische Strahlung zu Vermessungszwecken in einem erfindungsgemäßen Vermessungsgerät eingesetzt wird. Eine je nach Richtung unterschiedliche Divergenz liegt z.B. vor, wenn ein Kantenemitter als Strahlungsquelle verwendet wird. Mit dem erfindungsgemäß im Vermessungsgerät eingesetzten DOE 30 kann eine Strahlmodifikation erfolgen, um achsabhängig die Strahldivergenz auszugleichen, so dass sich der Strahlquerschnitt wie dargestellt von elliptisch zu kreisförmig homogenisiert. Dabei erfolgt die Transformation des Bündelquerschnitts nicht durch ein einfaches zylindrisches Zoomen, sondern durch Vermischen von Flächenelementen über den Strahlquerschnitt, so dass eine Glättung der Intensitäts- und Laufzeitwellenfront der modulierten Laserstrahlung resultiert.

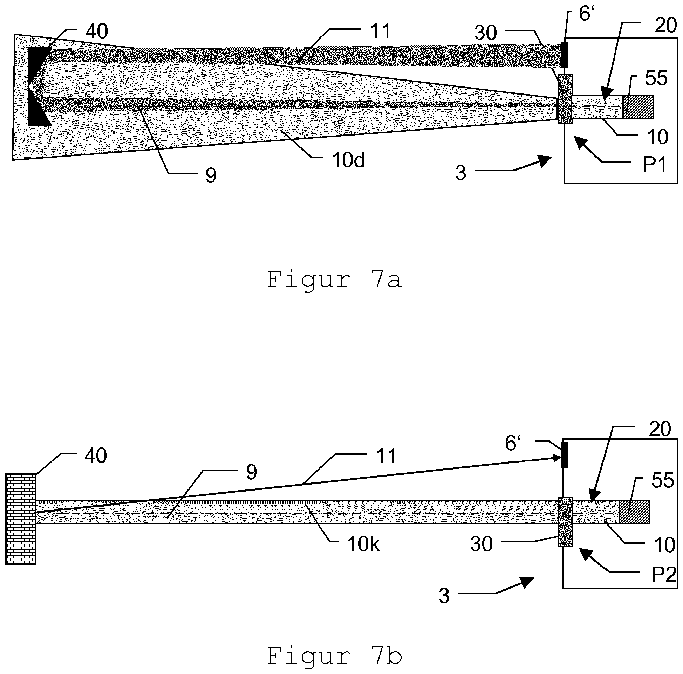

Die Figuren 7a und 7b zeigen eine Verwendung eines erfindungsgemässen DOE 30 zum Erzeugen eines divergenten Messstrahls 10d und eine automatisches Umschalten zwischen divergentem Messstrahls 10d und kollimiertem Messstrahl 10k. In der Figur 7a ist das DOE 30, z.B. ausgebildet als Hologramm, in einer ersten Position in der (nur ausschnittsweise dargestellten) Anzieleinheit 3, so dass im Strahlengang 20 angeordnet ist und den von der Strahlungsquelle 55 emittierten Strahl modifiziert. Das DOE 30 ist im Beispiel dergestalt ausgebildet und angeordnet, dass es neben einer Homogenisierung des Messstrahls 10 diesen auch so modifiziert, dass er als divergenter Strahl 10d auf das Zielobjekt 40 trifft. Ein solcher divergenter Strahl 10d findet wie dargestellt bei kooperativen Zielen 40 wie retroreflektiven Folien oder Tripelprismen Verwendung.

Die Divergenzmodifizierung erfolgt dabei vorteilhaft so, dass die (rein beispielhaft im Unterschied zum Beispiel nach Figur 2a als separate Einheit ausgeführte) Empfangsoptik 6' vom zurückkommenden (Anteil des) Messstrahl(s) 11 optimal ausgeleuchtet wird, also der Querschnitt des Empfangsmessstrahl(s) 11 diese vollständig ausleuchtet, wobei anderseits dieser wirksame Anteil des Messtrahls 11 über Reflexion am kooperativen Zielobjekt 40 aus einem homogensierten Anteil des divergenten Strahls 10d herausgeschnitten wird.

In Figur 7b befindet sich das DOE 30 in einer zweiten Position P2 derart, dass nur noch eine Homogenisierung des Strahls 10 erfolgt, so dass dieser als kollimierter Messstrahl 10k die Anzieleinheit 3 verlässt, wie dies z.B. für nicht-kooperative Ziele 40 üblicherweise erforderlich ist. Das DOE 30 ist hierzu beispielsweise in zwei unterschiedliche Bereiche oder Zonen unterteilt, wobei der eine Bereich nur eine Homogenisierung bewirkt, der andere Homogenisierung und divergentes Aussenden. Die Veränderung der Position von P1 nach P2 und damit das Umschalten von divergent zu kollimiert und umgekehrt erfolgt dabei automatisch, z.B. anhand einer automatischen Zielerkennung.

Auch kann das DOE mit weiteren Bereichen versehen sein, die sich beispielsweise über die erzeugte Strahldivergenz unterscheiden. Alternativ zu einer Positionsänderung von Strahlengang 20 zu DOE 30 wie dargestellt kann das DOE 30 z.B. seine Lage relativ zum Strahlengang 20 durch Rotation ändern, so dass je nach Drehstellung des DOE 30 der ausgehende Messstrahl unterschiedliche Divergenzzonen durchläuft und damit unterschiedliche (darunter z.B. eben auch gar keine) Divergenzmodifikation erfährt. Als weitere Option weist die Anzieleinheit 3 anstelle eines DOE 30 wenigstens zwei diffraktive optische Elemente auf, wobei das erste DOE nur homogenisiert und das zweite nur Divergenz erzeugt und im Bedarfsfall in den Strahlengang 20 eingeschwenkt wird. Oder das erste DOE ist ausschliesslich zur Homogenisierung ausgebildet und das zweite DOE erfüllt beide Funktionen, so dass z.B. das zweite DOE für eine Zielerfassung eingeschwenkt und das erste ausgeschwenkt wird und für eine Entfernungsmessung gerade umgekehrt vorgegangen wird. Nach dem gleichen Prinzip kann die Anzieleinheit 3 mehrere diffraktive optische Elemente für die unterschiedliche Divergenzerzeugung, z.B. für Entfernungsmessung und Zielerfassung, aufweisen, welche wechselseitig in den Strahlengang einbringbar 20 sind. Für ein solches wechselseitiges Einbringen sind diese Elemente z.B. in einem Verschiebemechanismus angeordnet oder einem Drehmechanismus (z.B. einem Revolver).

Als weitere Alternative (nicht dargestellt) ist das DOE 30 für reflektorlose Messung komplett aus dem Strahlengang 20 ausschwenkbar (oder der Messstrahl komplett um das DOE 30 umlenkbar), so dass das DOE 30 den Messstrahl für eine solche Messart nicht modifiziert. Je nach Ausführungsform und Messaufgabe kann eine Strahlhomogenisierung nur für Messungen zu kooperativen Zielen 40 erforderlich sein, d.h. das DOE 30 muss nur fallweise, je nach Zieltyp oder Messaufgabe, im Strahlengang anordenbar sein. Bei Vermessungsgeräten, die für Messungen zu beiden Zieltypen, also kooperativ und nicht-kooperativ, entworfen sind, ist das DOE 30 also optional nicht fix im Strahlengang 20 angeordnet, sondern zur fallweisen Homogenisierung und ggf. Erzeugen eines divergenten Strahls 10d im Strahlengang anordenbar (z.B. durch Mittel zum Ein- und Ausschwenken oder zur Veränderung des Strahlengangs).

Es versteht sich, dass diese dargestellten Figuren nur mögliche Ausführungsbeispiele schematisch darstellen. Die verschiedenen Ansätze können -soweit nicht anders vermerktebenso miteinander sowie mit Verfahren und Vermessungsgeräten des Stands der Technik kombiniert werden.

## Patentansprüche

1. Optisches Vermessungsgerät (1) zur koordinativen Vermessung eines Zielobjekts (40),
insbesondere ein Theodolit, eine Totalstation, ein Laserscanner oder ein Lasertracker, mit mindestens einer Lichtquelle (55), insbesondere einer Laserlichtquelle, zur Generierung wenigstens eines optischen, insbesondere gepulsten, Messstrahls (10, 10i, 10h, 10d) und einer gegenüber einer Basis des Vermessungsgeräts (1) um wenigstens eine Achse, insbesondere um zwei Achsen (7, 8), drehbaren Anzieleinheit (3), wobei die Anzieleinheit (3)
▪ eine Zielachse (9) zur Anzielung des zu vermessenden, insbesondere kooperativen, Zielobjekts (40) definiert und
▪ einen Strahlengang (20) zum Aussenden des optischen Messstrahls (10, 10i, 10h, 10d) in Richtung des zu vermessenden Zielobjekts (40) aufweist,
**dadurch gekennzeichnet, dass**
die Anzieleinheit (3) wenigstens ein diffraktives optisches Element (30) aufweist, wobei das wenigstens eine diffraktive optische Element (30) dergestalt ausgebildet und im Strahlengang (20, 20a) angeordnet oder anordenbar ist, dass der Messstrahl (10, 10i, 10h, 10d) vor dem Aussenden homogenisiert wird, indem das diffraktive optische Element (30) im Strahlengang (20, 20a) bewegbar angeordnet oder anordenbar ist, wobei zur, insbesondere zeitlichen, Homogenisierung die Relativlage von Messstrahl (10, 10i, 10h, 10d) und diffraktivem optischem Element (30) dynamisch, insbesondere periodisch, variierbar ist.

2. Vermessungsgerät (1) nach Anspruch 1,
**dadurch gekennzeichnet, dass**
das diffraktive optische Element (30) ausgebildet ist zum Mischen des Messstrahls (10, 10i, 10h, 10d), insbesondere zum Erzeugen einer Vielzahl von nebeneinander gesetzten und sich zumindest teilweise überlappenden Teilstrahlen.

3. Vermessungsgerät (1) nach Anspruch 1 oder 2,
**dadurch gekennzeichnet, dass**
das diffraktive optische Element (30) ausgebildet ist zur Homogenisierung
▪ der zeitlichen und/oder örtlichen Intensitätsverteilung innerhalb des Messstrahls (10, 10i, 10h, 10d) und/oder
▪ der Moden des Messstrahls (10, 10i, 10h, 10d) und/oder
▪ einer Wellenfront (18) des Messstrahls (10, 10i, 10h, 10d), insbesondere deren Glättung oder Einebnung, und/oder
▪ der Laufzeit eines Pulses des Messstrahls (10, 10i, 10h, 10d) und/oder
▪ der Abbildung der Lichtquelle (55, 12) im Fernfeld.

4. Vermessungsgerät (1) nach einem der vorigen Ansprüche, **dadurch gekennzeichnet, dass**
die Relativlage von Messstrahl (10, 10i, 10h, 10d) und diffraktivem optischen Element (30) dynamisch variierbar ist indem das diffraktive optische Element (30) im Strahlengang (20, 20a) dergestalt bewegbar angeordnet oder anordenbar ist, dass das diffraktive optische Element (30) über den Messstrahl (10, 10i, 10h, 10d) hinweg dynamisch bewegbar ist.

5. Vermessungsgerät (1) nach Anspruch 4,
**dadurch gekennzeichnet, dass**
das diffraktive optische Element (30)
▪ vibrierbar ist, insbesondere senkrecht zu einer Ausbreitungsachse des Messstrahls (10, 10i, 10h, 10d), und/oder
▪ rotierbar ist, insbesondere mit einer Exzentrizität und/oder um eine Ausbreitungsachse des Messstrahls (10, 10i, 10h, 10d) oder eine dazu parallel versetzte Achse.

6. Vermessungsgerät (1) nach einem der vorigen Ansprüche,
**dadurch gekennzeichnet, dass**
das diffraktive optische Element (30)
▪ ein- und ausschwenkbar zum Messstrahl (10, 10i, 10h, 10d) angeordnet ist, und/oder
▪ Bereiche unterschiedlicher Homogenisierung aufweist und relativ zum Messstrahl (10, 10i, 10h, 10d) unterschiedlich anordenbar ist, dass der Messtrahl (10, 10i, 10h, 10d) je nach Anordnung unterschiedlich homogenisiert wird.

7. Vermessungsgerät (1) nach einem der vorigen Ansprüche,
**dadurch gekennzeichnet, dass**
das diffraktive optische Element (30) ausgebildet ist
▪ zur Veränderung des Strahlprofils (19g) des Messstrahls (10, 10i, 10h, 10d), insbesondere im Fernfeld und/oder ausgehend von einem Gauss-Strahlprofil und/oder zur Erzeugung eines top hat-Strahlprofils, und/oder
▪ zur Minderung oder Beseitigung zeitlicher und/oder richtungsabhängiger Inhomogenitäten, insbesondere Intensitätsinhomogenitäten, des Messstrahls (10, 10i, 10h, 10d).

8. Vermessungsgerät (1) nach einem der vorigen Ansprüche,
**dadurch gekennzeichnet, dass**
im Strahlengang (20, 20a) wenigstens ein weiteres diffraktives optisches Element angeordnet oder anordenbar ist, welches ausgebildet ist zur Homogenisierung des Messstrahls (10, 10i, 10h, 10d).

9. Vermessungsgerät (1) nach einem der vorigen Ansprüche,
**dadurch gekennzeichnet, dass**
das diffraktive optisches Element (30) ausgebildet ist zur Umformung des Messstrahls (10, 10i, 10h, 10d) in einen divergenten Messstrahl (10d), insbesondere
▪ mit einem Divergenzwinkel, der abgestimmt ist auf das Sichtfeld einer Empfangsoptik (6, 6') der Anzieleinheit (3), im Speziellen wobei der Divergenzwinkel maximal 3°, insbesondere etwa 0,075°, 0,1°, 0,2° oder 1,5°, beträgt und/oder
▪ wobei ein automatisches Umschalten einer axialen Fokussierung des Strahlengangs (20, 20a) zwischen divergent und kollimiert durchführbar ist.

10. Vermessungsgerät (1) nach einem der vorigen Ansprüche,
**dadurch gekennzeichnet, dass**
▪ die Anzieleinheit (3) derart ausgebildet ist und das diffraktive optische Element (30) derart in der Anzieleinheit (3) angeordnet ist, dass der vom diffraktiven optischen Element (30) ausgehende Messstrahl (10, 10i, 10h, 10d) als Freistrahl propagiert, und/oder
▪ der Strahlengang (20) lichtleiterlos ist und/oder
▪ die Lichtquelle (55, 12) eine Laserdiode ist, insbesondere wobei die Laserdiode ausgebildet ist als Kantenemitter, und/oder
▪ das Vermessungsgerät (1) einen opto-elektronischen Entfernungsmesser aufweist, wobei der Messstrahl (10, 10i, 10h, 10d) geeignet ist zur Bestimmung einer Entfernung zum Zielobjekt (40) mittels des opto-elektronischen Entfernungsmessers, und/oder
▪ das Vermessungsgerät (1) eine automatische Zielerfassung aufweist, insbesondere zur Bestimmung der Winkel zum Zielobjekt (40), mit einem optischen divergenten Zielerfassungsstrahl und das diffraktive optische Element (30) dergestalt ausgebildet und in einem Strahlengang (20a) des Zielerfassungsstrahls angeordnet ist, dass der Zielerfassungsstrahl vor dem Aussenden homogenisiert wird.

11. Vermessungsgerät (1) nach einem der vorigen Ansprüche,
**dadurch gekennzeichnet, dass**
das diffraktive optische Element (30)
▪ polarisationserhaltend ist und/oder
▪ als optischer Diffusor ausgebildet ist, insbesondere mit einem Streuwinkel von höchstens 3°, und/oder
▪ durch Replikationstechnik hergestellt ist, insbesondere wobei das diffraktive optische Element ein replikationstechnisch aufgebrachtes Schichtmaterial, insbesondere mit einer Schichtdicke von weniger als 0.15 mm, im Speziellen weniger als 0.05 mm aufweist, und/oder
▪ aus Glas, insbesondere Kronglas, Kunststoff oder Kombinationen aus Glas und Kunststoff besteht und/oder
▪ als Hologramm ausgebildet ist, insbesondere als Strukturhologramm, und/oder
▪ als Hybridlinse aus einer refraktiven, insbesondere asphärischen oder sphärischen, Linse mit einer diffraktiven Struktur ausgebildet ist.

12. Vermessungsgerät (1) nach einem der vorigen Ansprüche,
**dadurch gekennzeichnet, dass**
das diffraktive optische Element (30) zur Unterdrückung der nullten Beugungsordnung und/oder von Beugungsordnungen grösser als eins, insbesondere mittels einer Erzeugung großer Streukreise bei einer Beugung für diese Beugungsordnungen, ausgebildet ist, insbesondere mit einer verbleibender Intensität von höheren Beugungsordnungen mit einem Anteil von weniger als 5 % einer Gesamtintensität.

13. Verfahren zur koordinativen Vermessung eines, insbesondere kooperativen, Zielobjekts (40) mit einem optischen Vermessungsgerät (1), insbesondere einem Theodolit, einer Totalstation, einem Laserscanner oder einem Lasertracker, mit Anzielen des Zielobjekts (40) mit einer Zielachse (9) einer Anzieleinheit (3), wobei das Anzielen mit einem Aussenden von optischer, insbesondere gepulster und/oder divergenter, Messstrahlung (10, 10h, 10d), insbesondere Laserstrahlung, entlang eines ersten Strahlengangs (20, 20a) in Richtung des, insbesondere im Fernfeld platzierten, Zielobjekts (40) erfolgt,
**gekennzeichnet durch**
ein, insbesondere zeitliches und/oder örtliches, Homogenisieren der Messstrahlung (10, 10i, 10h, 10d) vor dem Aussenden mittels wenigstens einem diffraktiven optischen Elements (30) im Strahlengang (20, 20a), indem das diffraktive optische Element (30) im Strahlengang (20, 20a) bewegbar angeordnet oder anordenbar ist, wobei zum, insbesondere zeitlichen, Homogenisieren die Relativlage von Messstrahl (10, 10i, 10h, 10d) und diffraktivem optischem Element (30) dynamisch, insbesondere periodisch, variierbar ist.

14. Verfahren nach Anspruch 13,
**dadurch gekennzeichnet, dass**
das Homogenisieren ein Vereinheitlichen ist
▪ der zeitlichen und/oder räumlichen Intensitätsverteilung der Messstrahlung (10, 10i, 10h, 10d) und/oder
▪ der Moden der Messstrahlung (10, 10i, 10h, 10d) und/oder
▪ der Wellenfront der Messstrahlung (10, 10i, 10h, 10d), insbesondere deren Glättung oder Einebnung, und/oder
▪ der Laufzeit eines Pulses der Messstrahlung(10, 10i, 10h, 10d).

15. Computerprogrammprodukt mit Programmcode, der auf einem maschinenlesbaren Träger, insbesondere eines Vermessungsgeräts nach Anspruch 1, gespeichert ist, oder Computer-Daten-Signal, verkörpert durch eine elektromagnetische Welle, zur Durchführung des Verfahrens nach Anspruch 13 oder 14.

## Claims

1. Optical measuring device (1) for coordinative measurement of a target object (40),
in particular a theodolite, a total station, a laser scanner or a laser tracker, with at least one light source (55), in particular a laser light source, for generating at least one optical, in particular pulsed, measurement beam (10, 10i, 10h, 10d) and a targeting unit (3) that is rotatable relative to a base of the measuring device (1) about at least one axis, in particular about two axes (7, 8), wherein the targeting unit (3)
▪ defines a target axis (9) for targeting the, in particular cooperative, target object (40) that is to be measured and
▪ has a beam path (20) for emitting the optical measurement beam (10, 10i, 10h, 10d) in the direction of the target object (40) that is to be measured,
**characterized in that**
the targeting unit (3) has at least one diffractive optical element (30), wherein the at least one diffractive optical element (30) is embodied such and arranged or arrangeable in the beam path (20, 20a) such that the measurement beam (10, 10i, 10h, 10d) is homogenized before emission, by way of the diffractive optical element (30) being arranged or being able to be arranged movably in the beam path (20, 20a), whereby for, in particular temporal, homogenization, the relative position of measurement beam (10, 10i, 10h, 10d) and diffractive optical element (30) is dynamically, in particular periodically, variable.

2. Measuring device (1) according to Claim 1,
**characterized in that**
the diffractive optical element (30) is embodied for mixing the measurement beam (10, 10i, 10h, 10d), in particular for producing a multiplicity of at least partially overlapping partial beams which are placed one next to the other.

3. Measuring device (1) according to Claim 1 or 2,
**characterized in that**
the diffractive optical element (30) is embodied for homogenizing
▪ the temporal and/or spatial intensity distribution within the measurement beam (10, 10i, 10h, 10d) and/or
▪ the modes of the measurement beam (10, 10i, 10h, 10d) and/or
▪ a wavefront (18) of the measurement beam (10, 10i, 10h, 10d), in particular the smoothing or leveling thereof, and/or
▪ the time of flight of a pulse of the measurement beam (10, 10i, 10h, 10d) and/or
▪ the imaging of the light source (55, 12) in the far field.

4. Measuring device (1) according to any one of the preceding claims,
**characterized in that**
the relative position of measurement beam (10, 10i, 10h, 10d) and diffractive optical element (30) is dynamically variable by way of the diffractive optical element (30) being arranged or being able to be arranged movably in the beam path (20, 20a) such that the diffractive optical element (30) is dynamically movable over the measurement beam (10, 10i, 10h, 10d).

5. Measuring device (1) according to Claim 4,
**characterized in that**
the diffractive optical element (30)
▪ is vibrable, in particular perpendicularly to a propagation axis of the measurement beam (10, 10i, 10h, 10d), and/or
▪ is rotatable, in particular with an eccentricity and/or about a propagation axis of the measurement beam (10, 10i, 10h, 10d) or an axis that has a parallel offset with respect thereto.

6. Measuring device (1) according to any one of the preceding claims,
**characterized in that**
the diffractive optical element (30)
▪ is arranged to be pivotable in and out with respect to the measurement beam (10, 10i, 10h, 10d), and/or
▪ has regions of different homogenization and is arrangeable differently relative to the measurement beam (10, 10i, 10h, 10d), **in that** the measurement beam (10, 10i, 10h, 10d) is homogenized differently depending on the arrangement.

7. Measuring device (1) according to any one of the preceding claims,
**characterized in that**
the diffractive optical element (30) is embodied
▪ for changing the beam profile (19g) of the measurement beam (10, 10i, 10h, 10d), in particular in the far field and/or starting from a Gaussian beam profile and/or for producing a top-hat beam profile, and/or
▪ for reducing or eliminating temporal and/or direction-dependent inhomogeneities, in particular intensity inhomogeneities, of the measurement beam (10, 10i, 10h, 10d).

8. Measuring device (1) according to any one of the preceding claims,
**characterized in that**
at least one further diffractive optical element is arranged or arrangeable in the beam path (20, 20a), which is embodied for homogenizing the measurement beam (10, 10i, 10h, 10d).

9. Measuring device (1) according to any of the preceding claims, **characterized in that**
the diffractive optical element (30) is embodied for reshaping the measurement beam (10, 10i, 10h, 10d) into a divergent measurement beam (10d), in particular
▪ having a divergence angle, which is matched to the field of view of a receiving optical unit (6, 6') of the targeting unit (3), specifically wherein the divergence angle is at most 3°, in particular approximately 0.075°, 0.1°, 0.2° or 1.5°, and/or
▪ wherein automatic switching of an axial focusing of the beam path (20, 20a) between divergent and collimated is performable.

10. Measuring device (1) according to any one of the preceding claims,
**characterized in that**
▪ the targeting unit (3) is embodied such and the diffractive optical element (30) is arranged in the targeting unit (3) such that the measurement beam (10, 10i, 10h, 10d) coming from the diffractive optical element (30) propagates as a free beam, and/or
▪ the beam path (20) is light-guide-free and/or
▪ the light source (55, 12) is a laser diode, wherein in particular the laser diode is embodied as an edge emitter, and/or
▪ the measuring device (1) has an optoelectronic distance meter, wherein the measurement beam (10, 10i, 10h, 10d) is suitable for determining a distance from the target object (40) using the optoelectronic distance meter, and/or
▪ the measuring device (1) has automatic target recognition, in particular for determining the angles with respect to the target object (40), with an optical divergent target recognition beam, and the diffractive optical element (30) is embodied such and arranged in a beam path (20a) of the target recognition beam such that the target recognition beam is homogenized before emission.

11. Measuring device (1) according to any one of the preceding claims,
**characterized in that**
the diffractive optical element (30)
▪ is polarization-maintaining and/or
▪ is embodied in the form of an optical diffuser, in particular having a scattering angle of at most 3°, and/or
▪ is produced by replication technology, in particular wherein the diffraction optical element has a coating material which has been applied by way of replication technology, in particular having a layer thickness of less than 0.15 mm, specifically less than 0.05 mm, and/or
▪ consists of glass, in particular crown glass, plastic or combinations of glass and plastic, and/or
▪ is embodied in the form of a hologram, in particular of a structure hologram, and/or
▪ is embodied as a hybrid lens from a refractive, in particular aspheric or spherical, lens having a diffractive structure.

12. Measuring device (1) according to any of the preceding claims, **characterized in that**
the diffractive optical element (30) is embodied for suppressing the zero order of diffraction and/or diffraction orders greater than one, in particular by producing large scattering circles in the case of a diffraction for these diffraction orders, in particular with a remaining intensity of higher orders of diffraction with a proportion of less than 5% of an overall intensity.

13. Method for coordinative measurement of an, in particular cooperative, target object (40) with an optical measuring device (1), in particular a theodolite, a total station, a laser scanner or a laser tracker, with targeting of the target object (40) with a target axis (9) of a targeting unit (3), wherein targeting is effected with emission of optical, in particular pulsed and/or divergent, measurement radiation (10, 10h, 10d), in particular laser radiation, along a first beam path (20, 20a) in the direction of the target object (40), in particular placed in the far field,
**characterized by**
an, in particular temporal and/or spatial, homogenization of the measurement radiation (10, 10i, 10h, 10d) before emission using at least one diffractive optical element (30) in the beam path (20, 20a), by way of the diffractive optical element (30) being arranged or being able to be arranged movably in the beam path (20, 20a), whereby for, in particular temporal, homogenization, the relative position of measurement beam (10, 10i, 10h, 10d) and diffractive optical element (30) is dynamically, in particular periodically, variable.

14. Method according to Claim 13,
**characterized in that**
homogenization means unifying
▪ the temporal and/or spatial intensity distribution of the measurement radiation (10, 10i, 10h, 10d) and/or
▪ the modes of the measurement radiation (10, 10i, 10h, 10d) and/or
▪ the wavefront of the measurement radiation (10, 10i, 10h, 10d), in particular the smoothing or leveling thereof, and/or
▪ the time of flight of a pulse of the measurement radiation (10, 10i, 10h, 10d).

15. Computer program product with program code, which is stored on a machine-readable carrier, in particular of a measuring device according to Claim 1, or computer data signal, embodied by an electromagnetic wave, for performing the method according to Claim 13 or 14.

## Revendications

1. Appareil de mesure optique (1) pour la mesure par coordination d'un objet cible (40), en particulier un théodolite, une station totale, un scanner laser ou un suiveur laser, avec au moins une source de lumière (55), en particulier une source de lumière laser, pour générer au moins un faisceau de mesure (10, 10i, 10h, 10d) optique, en particulier pulsé, et une unité de visée (3), rotative autour d'au moins un axe, en particulier de deux axes (7, 8), par rapport à une base de l'appareil de mesure (1), cependant que l'unité de visée (3)
▪ définit un axe de visée (9) pour viser l'objet cible (40) à mesurer, en particulier coopératif, et
▪ une trajectoire de faisceau (20) pour émettre le faisceau de mesure optique (10, 10i, 10h, 10d) en direction de l'objet cible à mesurer (40),
**caractérisé en ce que**
l'unité de visée (3) présente au moins un élément optique diffractif (30), cependant que le au moins un élément optique diffractif (30) est configuré et est placé ou peut être placé dans la trajectoire de faisceau (20, 20a) de telle manière que le faisceau de mesure (10, 10i, 10h, 10d) est homogénéisé avant l'émission, l'élément optique diffractif (30) étant placé ou pouvant être placé mobile dans la trajectoire de faisceau (20, 20a), cependant que pour l'homogénéisation, en particulier temporelle, la position relative du faisceau de mesure (10, 10i, 10h, 10d) et de l'élément optique diffractif (30) peut être variée de manière dynamique, en particulier de manière périodique.

2. Appareil de mesure (1) selon la revendication 1, **caractérisé en ce que** l'élément optique diffractif (30) est configuré pour le mélange du faisceau de mesure (10, 10i, 10h, 10d), en particulier pour produire une multitude de faisceaux partiels mis l'un à côté de l'autre et qui se chevauchent au moins partiellement.

3. Appareil de mesure (1) selon la revendication 1 ou 2, **caractérisé en ce que** l'élément optique diffractif (30) est configuré pour l'homogénéisation
▪ de la répartition d'intensité temporelle et/ou locale à l'intérieur du faisceau de mesure (10, 10i, 10h, 10d) et/ou
▪ des modes du faisceau de mesure (10, 10i, 10h, 10d) et/ou
▪ d'un front d'onde (18) du faisceau de mesure (10, 10i, 10h, 10d), en particulier de son lissage ou de son nivellement, et/ou
▪ de la durée d'une impulsion du faisceau de mesure (10, 10i, 10h, 10d) et/ou
▪ de l'image de la source de lumière (55, 12) dans le champ lointain.

4. Appareil de mesure (1) selon l'une des revendications précédentes, **caractérisé en ce que** la position relative du faisceau de mesure (10, 10i, 10h, 10d) et de l'élément optique diffractif (30) peut être variée de manière dynamique, l'élément optique diffractif (30) étant placé ou pouvant être placé mobile dans la trajectoire de faisceau (20, 20a) de telle manière que l'élément optique diffractif (30) soit mobile au-delà du faisceau de mesure (10, 10i, 10h, 10d).

5. Appareil de mesure (1) selon la revendication 4, **caractérisé en ce que** l'élément optique diffractif (30)
▪ peut vibrer, en particulier perpendiculairement à un axe de propagation du faisceau de mesure (10, 10i, 10h, 10d) et ou
▪ peut tourner, en particulier avec une excentricité et/ou autour d'un axe de propagation du faisceau de mesure (10, 10i, 10h, 10d) ou d'un axe décalé parallèlement par rapport à celui-ci.

6. Appareil de mesure (1) selon l'une des revendications précédentes, **caractérisé en ce que** l'élément optique diffractif (30)
▪ est placé pivotant vers l'intérieur ou vers l'extérieur par rapport au faisceau de mesure (10, 10i, 10h, 10d) et/ou
▪ présente des zones de différente homogénéisation et peut être placé différemment par rapport au faisceau de mesure (10, 10i, 10h, 10d) de telle manière que le faisceau de mesure (10, 10i, 10h, 10d) est homogénéisé de manière différente selon le placement.

7. Appareil de mesure (1) selon l'une des revendications précédentes, **caractérisé en ce que** l'élément optique diffractif (30) est conçu
▪ pour la variation du profil de faisceau (19g) du faisceau de mesure (10, 10i, 10h, 10d), en particulier dans le champ lointain et/ou en partant d'un profil de faisceau de type gaussien et/ou pour générer un profil de faisceau de type top hat et/ou
▪ pour diminuer ou éliminer des inhomogénéités temporelles et/ou directionnelles, en particulier des inhomogénéités d'intensité du faisceau de mesure (10, 10i, 10h, 10d).

8. Appareil de mesure (1) selon l'une des revendications précédentes, **caractérisé en ce qu'**au moins un autre élément optique diffractif, qui est conçu pour l'homogénéisation du faisceau de mesure (10, 10i, 10h, 10d), est placé ou peut être placé dans la trajectoire de faisceau (20, 20a).

9. Appareil de mesure (1) selon l'une des revendications précédentes, **caractérisé en ce que** l'élément optique diffractif (30) est configuré pour la déformation du faisceau de mesure (10, 10i, 10h, 10d) en un faisceau de mesure divergent (10d), en particulier
▪ avec un angle de divergence qui est adapté au champ de vision d'une optique réceptrice (6, 6') de l'unité de visée (3), en particulier l'angle de divergence étant de 3° au maximum, en particulier étant d'environ 0,075°, 0,1°, 0,2° ou 1,5° et/ou
▪ une commutation automatique d'une focalisation axiale de la trajectoire de faisceau (20, 20a) entre divergente et collimatée pouvant être effectuée.

10. Appareil de mesure (1) selon l'une des revendications précédentes, **caractérisé en ce que**
▪ l'unité de visée (3) est configurée et l'élément optique diffractif (30) est placé dans l'unité de visée (3) de manière telle que le faisceau de mesure (10, 10i, 10h, 10d) qui part de l'élément optique diffractif (30) se propage comme faisceau libre et/ou
▪ la source de lumière (55, 12) est une diode laser, en particulier la diode laser étant configurée comme émetteur par la tranche et/ou
▪ l'appareil de mesure (1) présente un distancemètre optoélectronique, le faisceau de mesure (10, 10i, 10h, 10d) étant approprié pour déterminer une distance par rapport à l'objet cible (40) au moyen du distancemètre optoélectronique et/ou
▪ l'appareil de mesure (1) présente une détection automatique de cible, en particulier pour d'terminer les angles par rapport à l'objet cible (40), avec un faisceau optique divergent de détection de cible et l'élément optique diffractif (30) est configuré de telle manière et est placé dans une trajectoire de faisceau (20a) du faisceau de détection de cible de telle manière que le faisceau de détection de cible est homogénéisé avant l'émission.

11. Appareil de mesure (1) selon l'une des revendications précédentes, **caractérisé en ce que** l'élément optique diffractif (30)
▪ maintient la polarisation et/ou
▪ est configuré comme un diffuseur optique, en particulier avec un angle de dispersion de 3° au maximum et/ou
▪ est fabriqué par technique de réplication, en particulier l'élément optique diffractif présentant un matériau en couches appliqué par la technique de réplication, en particulier avec une épaisseur de couche de moins de 0,15 mm, en particulier de moins de 0,05 mm et/ou
▪ est en verre, en particulier en verre crown, en matière plastique ou en combinaisons de verre et de matière plastique et/ou
▪ est configuré comme un hologramme, en particulier comme un hologramme à structure et/ou
▪ comme lentille hybride d'une lentille réfractive, en particulier asphérique ou sphérique, avec une structure diffractive.

12. Appareil de mesure (1) selon l'une des revendications précédentes, **caractérisé en ce que** l'élément optique diffractif (30) est configuré pour la suppression de l'ordre de diffraction zéro et/ou d'ordres de diffraction supérieurs à un, en particulier au moyen de la génération de grands cercles de dispersion lors d'une diffraction pour ces ordres de diffraction, en particulier avec une intensité restante d'ordres de diffraction plus grand avec une proportion inférieure à 5% d'une intensité totale.

13. Procédé pour la mesure par coordination d'un objet cible (40), en particulier un objet cible coopératif (40) avec un appareil de mesure optique (1), en particulier un théodolite, une station totale, un scanner laser ou un suiveur laser, avec visée de l'objet cible (40) avec un axe de visée (9) d'une unité de visée (3), cependant que la visée se fait avec une émission de faisceau de mesure (10, 10h, 10d) optique, en particulier pulsé et/ou divergent, en particulier d'un faisceau laser, le long d'une première trajectoire de faisceau (20, 20a) en direction de l'objet cible (40) placé en particulier dans le champ lointain, **caractérisé par** une homogénéisation du faisceau de mesure (10, 10h, 10d), en particulier temporel et/ou local, avant l'émission au moyen d'au moins un élément optique diffractif (30) dans la trajectoire de faisceau (20, 20a), l'élément optique diffractif (30) étant placé ou pouvant être placé mobile dans la trajectoire de faisceau (20, 20a), cependant que pour l'homogénéisation, en particulier temporelle, la position relative du faisceau de mesure (10, 10i, 10h, 10d) et de l'élément optique diffractif (30) peut être variée de manière dynamique, en particulier de manière périodique.

14. Procédé selon la revendication 13, **caractérisé en ce que** l'homogénéisation est une uniformisation
▪ de la distribution temporelle et/ou spatiale de l'intensité du faisceau de mesure (10, 10i, 10h, 10d) et/ou
▪ des modes du faisceau de mesure (10, 10i, 10h, 10d) et/ou
▪ d'un front d'onde (18) du faisceau de mesure (10, 10i, 10h, 10d), en particulier de son lissage ou de son nivellement, et/ou
▪ de la durée d'une impulsion du faisceau de mesure (10, 10i, 10h, 10d).

15. Produit programme d'ordinateur avec code de programme qui est mémorisé sur un support lisible par machine, en particulier d'un appareil de mesure selon la revendication 1, ou signal de données informatiques, matérialisé par une onde électromagnétique, pour exécuter le procédé selon la revendication 13 ou 14.
